# FASCICULE DE BREVET EUROPEEN

(11) **EP 0 845 617 B1**
(45) Date de publication et mention de la délivrance du brevet: **19.09.2001**
(21) Numéro de dépôt: 97402829.2
(22) Date de dépôt: 25.11.1997
(51) Int. Cl.: F16F 13/10

(54) **Support antivibratoire et véhicule automobile comportant un tel support**
Schwingungsdämpfendes Lager und Kraftfahrzeug mit solchem Lager
Anti-vibration support, and vehicle with such a support

(30) Priorité: 28.11.1996 FR 9614591
(43) Date de publication de la demande: 03.06.1998
(73) Titulaire: HUTCHINSON, 75008 Paris (FR)
(72) Inventeur: Pizanti, Thierry, 28220 La Ferte Villeneuil (FR); Bellamy, Alain, 41100 Naveil (FR)
(74) Mandataire: Burbaud, Eric

(56) Documents cités:
- DE-A- 3 610 611
- FR-A- 2 726 339
- US-A- 4 392 639

## Description

La présente invention est relative aux supports antivibratoires et aux véhicules automobiles comportant de tels supports.

Plus particulièrement, l'invention concerne les supports antivibratoires destinés à être interposés entre deux éléments rigides pour amortir et atténuer des mouvements vibratoires entre ces deux éléments dans une direction selon un axe central vertical et pour supporter une charge permanente dans cette direction comprise entre 500 et 2 500 N, exercée par l'un de ces deux éléments, ces supports comportant des première et deuxième armatures rigides, destinées à être solidarisées respectivement avec les deux éléments rigides à réunir, et un corps en élastomère reliant entre elles les deux armatures, ce corps en élastomère présentant une paroi latérale en forme de cloche qui s'étend dans ladite direction en divergeant depuis un sommet jusqu'à une base annulaire solidaire de la deuxième armature, cette paroi latérale présentant au moins une partie élancée qui présente une certaine longueur libre 1 entre le sommet et la base du corps en élastomère et qui présente une certaine épaisseur moyenne e telles que le rapport l/e soit compris entre 2 et 8, le corps en élastomère présentant par ailleurs au moins une partie de soutien adaptée pour supporter la charge permanente, et une plaque de base rigide solidaire de la deuxième armature s'étendant au centre de la base annulaire du corps en élastomère.

Le document FR-A-2 726 339 (voir figures 13 à 15) décrit un support antivibratoire de ce type, dans lequel la paroi latérale du corps en élastomère comporte d'une part deux parois mutuellement opposées relativement élancées, qui constituent les parties élancées susmentionnées, et d'autre part, deux parois mutuellement opposées moins élancées qui constituent les parties de soutien susmentionnées.

Dans ce support antivibratoire connu, les deux parois élancées contribuent à diminuer la raideur du support, notamment vis-à-vis des vibrations de relativement haute fréquence (supérieure à 20 Hz et par exemple voisine de 150 Hz).

Ce phénomène est d'autant plus marqué que les parois élancées subissent un flambage lorsque le support est en charge.

Le support antivibratoire divulgué dans le document susmentionné donne toute satisfaction, mais présente toutefois l'inconvénient que les effets dus à la souplesse des parois élancées, et notamment les flambages desdites parois, sont gênés par le fait que ces parois élancées sont raccordées de chaque côté aux deux parois relativement épaisses et rigides qui constituent les parties de soutien du corps en élastomère.

Ce support antivibratoire connu ne permet donc pas d'obtenir une indépendance complète de fonctionnement entre, d'une part, les parties de soutien du corps en élastomère, et d'autre part, les parties élancées de la paroi latérale de ce corps en élastomère.

La présente invention a notamment pour but de pallier ces inconvénients.

A cet effet, selon l'invention, un support antivibratoire du genre en question est caractérisé en ce que le sommet de la paroi latérale (10) est solidaire de la première armature (6), en ce que la partie élancée susmentionnée constitue la totalité de la paroi latérale du corps en élastomère, et en ce que le corps en élastomère comporte un pied central qui s'étend verticalement depuis le sommet dudit corps en élastomère jusqu'au contact de la plaque de base, ce pied central constituant la partie de soutien susmentionnée et présentant, entre le sommet du corps en élastomère et la plaque de base, une certaine hauteur libre h ainsi qu'un certain diamètre équivalent d tels que le rapport h/d soit inférieur à 2 (le diamètre équivalent d peut être soit le diamètre moyen du pied central si ce pied central présente une forme cylindrique de révolution, soit, de façon plus générale, valoir d = 2 (S/π)^{½} où S est l'aire moyenne de la section horizontale du pied central), le corps en élastomère étant ainsi dimensionné pour que, lorsque la charge axiale permanente est appliquée au support, l'ensemble de la paroi latérale du corps en élastomère subisse un flambage et présente une raideur élastique sensiblement nulle, sans que le pied central ne subisse de flambage.

On obtient ainsi un découplage complet entre, d'une part, le fonctionnement du pied central, qui supporte la charge permanente appliquée au support, et d'autre part, le comportement de la paroi latérale élancée, lorsque des vibrations sont appliquées au support.

En particulier, le flambage de la paroi latérale du corps en élastomère confère au support antivibratoire hydraulique une faible raideur vis-à-vis des vibrations de relativement petite amplitude (par exemple, inférieure à 1 mm) et de relativement grande fréquence (par exemple supérieure à 20 Hz et notamment de l'ordre de 150 Hz).

Il en résulte une très bonne absorption de ces vibrations de grande fréquence, donc une meilleure isolation acoustique entre les premier et deuxième éléments rigides reliés par le support antivibratoire.

Par ailleurs, grâce à la présence du pied central du corps en élastomère, la faible raideur du support aux fréquences acoustiques ne se traduit pas pour autant par des débattements axiaux excessifs des deux armatures l'une par rapport à l'autre.

Dans des modes de réalisation préférés, on peut éventuellement avoir recours en outre à l'une et/ou à l'autre des dispositions suivantes :
- la paroi latérale du corps en élastomère délimite, avec la plaque de base, une chambre de travail qui communique, par l'intermédiaire d'un passage étranglé, avec une chambre de compensation délimitée par une paroi aisément déformable, la chambre de travail formant avec la chambre de compensation et le passage étranglé un volume étanche rempli de liquide ;
- la paroi latérale du corps en élastomère présente, vue en section selon un plan vertical qui contient l'axe central, une forme concave présentant une concavité dirigée vers l'extérieur de la chambre de travail : cette disposition favorise le flambage de la paroi latérale du corps en élastomère vers l'intérieur de la chambre de travail, ce qui augmente encore l'efficacité hydraulique du support antivibratoire ;
- le rapport l/e est compris entre 3 et 6 ;
- le rapport h/d est compris entre 0,5 et 0,7 ;
- le corps en élastomère présente une forme de révolution autour de l'axe central ;
- la plaque de base présente un rebord annulaire qui entoure le pied central du corps en élastomère ;
- la plaque de base fait partie d'une cloison rigide qui est fixée à la deuxième armature et qui est interposée entre la chambre de travail et la chambre de compensation, cette cloison rigide délimitant le passage étranglé et comprenant par ailleurs un passage entre les deux chambres, ce passage étant obturé par un clapet qui présente deux faces principales communiquant l'une avec la chambre de travail et l'autre avec la chambre de compensation et qui comporte au moins une partie librement déplaçable vers la chambre de travail et vers la chambre de compensation avec un jeu inférieur à 1 mm ;
- le pied central est précontraint en compression par la paroi latérale du corps en élastomère.

Par ailleurs, l'invention a également pour objet un véhicule automobile comportant un support antivibratoire tel que défini ci-dessus et deux éléments rigides reliés entre eux par ce support, l'un de ces deux éléments rigides imposant au support une charge verticale permanente comprise entre 500 et 2 500 N, la paroi latérale du corps en élastomère étant soumise à un flambage et présentant alors une raideur élastique sensiblement nulle, et le pied central ne subissant, quant à lui, pas de flambage.

Les deux éléments rigides en question peuvent notamment être constitués respectivement par le bloc motopropulseur et le châssis du véhicule.

D'autres caractéristiques et avantages de l'invention apparaîtront au cours de la description détaillée suivante d'une de ses formes de réalisation, donnée à titre d'exemple non limitatif, en regard des dessins joints.

Sur les dessins :
- la figure 1 représente très schématiquement un véhicule automobile doté d'un support antivibratoire hydraulique, selon une forme de réalisation de l'invention,
- la figure 2 est une vue en coupe axiale du support antivibratoire équipant le véhicule de la figure 1, la figure 2 montrant ce support lorsqu'aucune charge ne lui est appliquée,
- la figure 3 est une vue de dessus de la plaque de base du support de la figure 2,
- la figure 4 est une vue en coupe axiale partielle montrant le support de la figure 2, lorsqu'une charge axiale permanente lui est appliquée,
- et la figure 5 est un graphe montrant la relation entre l'effort axial F appliqué au support des figures 2 à 4 et la compression axiale x de ce support.

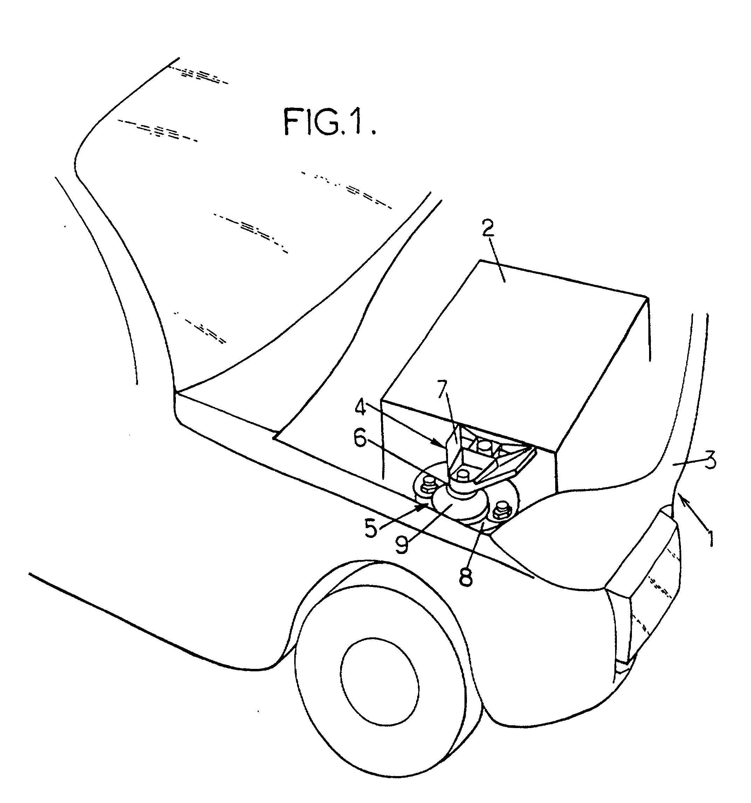

L'invention s'applique préférentiellement, mais non exclusivement, à un véhicule automobile 1 comportant un bloc motopropulseur 2 qui est supporté sur le châssis 3 du véhicule par l'intermédiaire de plusieurs dispositifs de fixation, dont l'un est visible sur la figure 1.

Ce dispositif de fixation 4 comprend un support antivibratoire hydraulique 5 qui présente :
- une première armature rigide 6 métallique, fixée à un bras de support rigide métallique 7, lui-même solidarisé avec le bloc motopropulseur 2,
- une deuxième armature rigide métallique 8 fixée au châssis 3,
- et un corps en élastomère 9 reliant entre elles les deux armatures 6, 8.

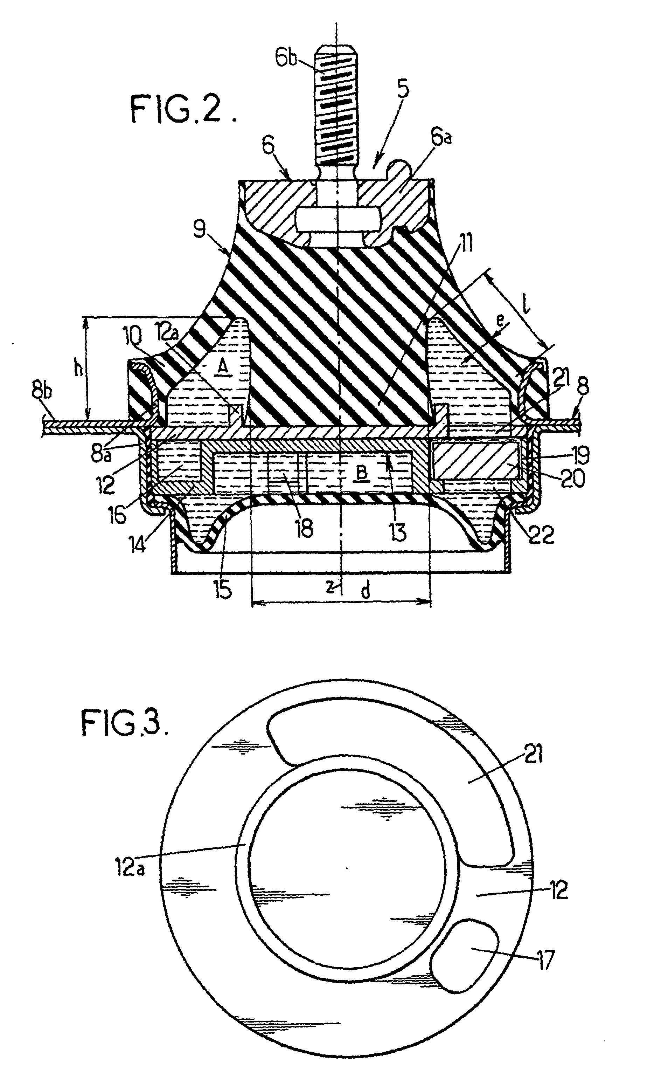

Comme représenté plus en détail sur les figures 2 et 3, la première armature 6 est constituée par un plot central métallique 6a prolongé vers le haut par un goujon 6b qui permet la fixation au bras de support 7.

Par ailleurs, la deuxième armature 8 se présente sous la forme d'un anneau rigide constitué par deux plaquettes métalliques annulaires soudées l'une sur l'autre, chacune de ces plaquettes étant délimitée intérieurement par un bord rabattu 8a et étant prolongée vers l'extérieur par des pattes de fixation 8b, elle-mêmes perforées par des trous de fixation (non représentés).

Enfin, le corps en élastomère 9 présente quant à lui une paroi latérale 10 sensiblement tronconique, de révolution autour d'un axe central vertical Z, cette paroi latérale s'étendant entre d'une part un sommet solidaire de la première armature 6 et d'autre part une base annulaire surmoulée sur l'un des bords rabattus 8a de la deuxième armature.

La paroi latérale 9, vue en section dans un plan vertical comprenant l'axe Z, présente une longueur libre 1 et une épaisseur e telles que l'élancement l/e de cette paroi latérale soit compris entre 2 et 8 et de préférence compris entre 3 et 6, par exemple de l'ordre de 4.

Par ailleurs, de préférence, cette paroi latérale 9 présente, toujours vue en section dans un plan vertical qui contient l'axe Z, une forme concave ayant une concavité tournée vers l'intérieur.

De plus, le corps en élastomère 9 comporte en outre un pied central 11 sensiblement cylindrique de révolution, centré sur l'axe Z, qui présente une hauteur libre h et un diamètre moyen d tels que l'élancement h/d de ce pied central soit inférieur à 2, avantageusement inférieur à 1 et de préférence compris entre 0,5 et 0,7, par exemple de l'ordre de 0,6.

Le pied central 11 s'étend axialement depuis le sommet du corps en élastomère jusqu'au contact d'une plaque de base 12 métallique qui est solidarisée avec la deuxième armature 8 et qui présente de préférence un rebord annulaire 12a entourant la partie inférieure du pied central 11 en s'étendant sur une faible hauteur.

Cette plaque de base 12 fait partie d'une cloison rigide 13 qui comporte par ailleurs une plaque métallique 14 emboutie ou moulée sur laquelle est empilée la plaque de base, l'ensemble de la cloison 13 étant fixé à la deuxième armature 8 par sertissage d'un des bords rabattus 8a de cette deuxième armature.

Le même sertissage permet de fixer de façon étanche à la cloison 13 et à la deuxième armature 8 la périphérie d'un soufflet en élastomère 15 mince et flexible qui délimite un boîtier étanche avec le corps en élastomère 3 et la deuxième armature 8.

Ce boîtier est divisé en deux chambres par la cloison 13, savoir, d'une part, une chambre de travail A annulaire délimitée par le corps en élastomère 9, et d'autre part, une chambre de compensation B délimitée par le soufflet 15, ces deux chambres communiquant l'une avec l'autre par l'intermédiaire d'un passage étranglé 16 ménagé dans la cloison 13.

Plus exactement, dans l'exemple représenté sur les figures 2 et 3, le passage étranglé 16 est délimité entre d'une part la plaque de base 12 et d'autre part une gorge ménagée dans la plaque 14, ce passage étranglé 16 débouchant verticalement dans la chambre de travail A par une ouverture 17 ménagée dans la plaque de base 12 à l'extérieur du rebord 12a, et ledit passage étranglé 16 débouchant par ailleurs radialement vers l'intérieur dans la chambre de compensation B par l'intermédiaire d'une ouverture 18 ménagée dans la plaque 14.

Par ailleurs, la cloison 13 comporte en outre un logement 19, qui s'étend angulairement au voisinage de la périphérie de la cloison 13, dans une partie de cette cloison non occupée par le passage étranglé 16.

Dans ce logement 19 est disposé un clapet 20 qui présente ici la forme d'une plaquette d'élastomère relativement épaisse.

La face principale horizontale supérieure du clapet 20 communique avec la chambre de travail A par l'intermédiaire d'une ouverture 21 ménagée dans la plaque de base 12, à l'extérieur du rebord 12a, et la face principale horizontale inférieure du clapet 20 communique avec la chambre de compensation B par l'intermédiaire d'une ouverture 22 ménagée dans la plaque 14.

Les ouvertures 21, 22 présentent des dimensions horizontales inférieures aux dimensions horizontales du clapet 20 et du logement 19, de sorte que le clapet 20 est emprisonné dans le logement 19, avec un faible jeu vertical, généralement inférieur à 1 mm.

Le cas échéant, les ouvertures 21, 22 pourraient être occupées par des grilles.

Par ailleurs, au lieu de se présenter sous la forme d'une plaquette d'élastomère emprisonnée dans un logement, le clapet pourrait se présenter sous la forme d'une paroi relativement souple dont la périphérie serait fixée de façon étanche à la cloison 13.

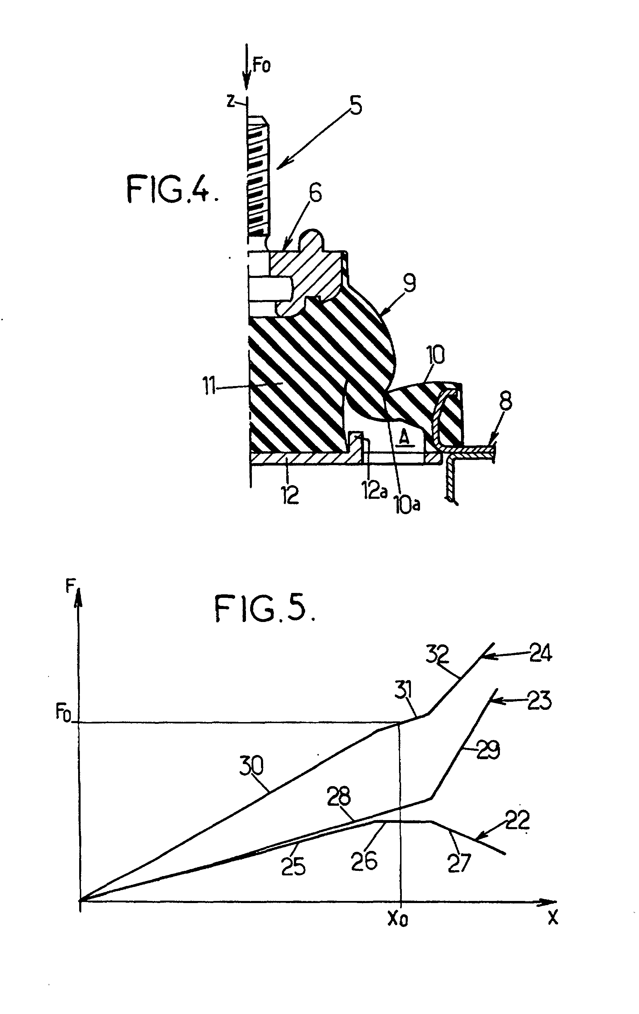

Lorsque le dispositif qui vient d'être décrit supporte la charge statique F0 que lui impose le bloc motopropulseur 2 et qui peut être comprise par exemple entre 500 et 2 500 N, cette charge statique comprime le corps en élastomère 9, comme représenté sur la figure 4.

Plus précisément, la charge statique F0 est reprise à la fois par le pied central 11 et la paroi latérale 10 du corps en élastomère, mais, du fait de son élancement important, la paroi latérale 10 subit un flambage et forme un pli 10a dirigé radialement vers l'intérieur de la chambre de travail A, tandis que, du fait de son faible élancement, le pied central 11 subit simplement une compression verticale sans flambage.

Ce phénomène est illustré par le graphe représenté sur la figure 5, qui montre trois courbes 22, 23, 24 représentatives respectivement de la relation entre la force axiale appliquée F et le rapprochement axial x des première et deuxième armatures, pour la paroi latérale 10 seule (courbe 22), pour le pied central 11 seul (courbe 23) et pour l'ensemble du corps en élastomère 9 (courbe 24).

On peut voir sur la figure 5 que la courbe 22 comporte initialement une première portion linéaire croissante 25, puis un palier 26 sensiblement horizontal, puis une portion décroissante 27.

Le palier horizontal 26 de la courbe 22 correspond au début du flambage de la paroi latérale 10. Il est à noter en particulier que lorsque la paroi latérale 10 est dans un état qui correspond à ce palier, elle reprend toujours une partie non négligeable de la charge axiale appliquée au corps en élastomère, mais présente par contre une raideur sensiblement nulle du fait de l'horizontalité du palier 26.

La courbe 23 relative au pied central 11 présente, quant à elle, une portion initiale linéaire 28 jusqu'à une valeur de x qui peut correspondre par exemple à la fin du palier 26, puis une portion 29 de pente beaucoup plus élevée, correspondant à la raideur de confinement du pied central.

Enfin, la courbe 24 correspond à une fonction F(x) = F1(x) + F2(x), où F1(x) et F2(x) sont les fonctions représentatives des courbes 22 et 23.

Cette courbe 24 présente une portion initiale linéaire correspondant à une raideur relativement élevée, par exemple de l'ordre de 150 N/mm, puis une deuxième portion linéaire 31 qui correspond au palier 26 de la courbe 22 et qui présente une pente relativement faible, représentative d'une raideur pouvant être par exemple de l'ordre de 80 N/mm, et enfin, une portion 32 ayant une pente élevée, correspondant à la portion 29 de la courbe 23.

Lorsque la charge statique F0 est appliquée au support antivibratoire 5, celui-ci subit une compression x0 telle que le point de coordonnées (F0, x0) se trouve sur la portion 31 de la courbe 24.

Autrement dit, lorsque la charge statique F0 est appliquée au support antivibratoire 5, la paroi latérale 10 se trouve dans un état de flambage qui correspond au palier horizontal 26, de sorte que cette paroi latérale participe encore à la reprise de l'effort F0, mais ne participe plus à la raideur du support antivibratoire vis-à-vis des vibrations subies par ce support autour de son point d'équilibre.

Cette faible raideur ainsi obtenue, pouvant être par exemple de l'ordre de 80 N/mm, permet une excellente atténuation des vibrations, et notamment des vibrations de relativement haute fréquence, dans le domaine acoustique.

Par ailleurs, ces vibrations de relativement haute fréquence et de faible amplitude sont également absorbées par le clapet 20 : le support antivibratoire 5 présente donc une excellente efficacité vis-à-vis de ces vibrations de haute fréquence.

De plus, vis-à-vis des vibrations de basse fréquence (par exemple inférieure à 20 Hz), et de relativement grande amplitude (par exemple supérieure à 1 mm), sont quant à elles amorties par transfert de liquide entre la chambre de travail A et la chambre de compensation B au travers du passage étranglé 16.

Le flambage de la paroi latérale 10, qui forme un pli 10a dirigé radialement vers l'intérieur de la chambre de travail et qui donne une allure sensiblement horizontale à cette paroi latérale 10, facilite cet effet de refoulement de liquide et augmente ainsi l'efficacité hydraulique du dispositif.

Bien entendu, l'invention n'est pas limitée au mode de réalisation particulier qui vient d'être décrit. En particulier, elle embrasse notamment la variante dans laquelle le pied central 11 serait précontraint en compression avant mise en charge, par le biais de la paroi latérale 10, cette paroi latérale se trouvant alors sollicitée en traction avant la mise en charge du support antivibratoire.

Par ailleurs, le support antivibratoire 5 pourrait le cas échéant être non hydraulique, auquel cas le soufflet 15 et la plaque 14 seraient supprimés, la seconde armature 8 étant alors directement sertie sur la plaque de base 12.

## Revendications

1. Support antivibratoire destiné à être interposé entre deux éléments rigides (2,3) pour amortir et atténuer des mouvements vibratoires entre ces deux éléments dans une direction selon un axe central vertical (Z) et pour supporter une charge permanente (F0) dans cette direction comprise entre 500 et 2500 N, exercée par l'un (2) de ces deux éléments, ce support comportant des première et deuxième armatures rigides (6,8), destinées à être solidarisées respectivement avec les deux éléments rigides à réunir, et un corps en élastomère (9) reliant entre elles les deux armatures, ce corps en élastomère présentant une paroi latérale (10) en forme de cloche qui s 'étend dans ladite direction en divergeant depuis un sommet jusqu'à une base annulaire solidaire de la deuxième armature (8), cette paroi latérale présentant au moins une partie élancée qui présente une certaine longueur libre 1 entre le sommet et la base du corps en élastomère et qui présente une certaine épaisseur moyenne e telles que le rapport l/e soit compris entre 2 et 8, le corps en élastomère présentant par ailleurs au moins une partie de soutien (11) adaptée pour supporter la charge permanente (F0), et une plaque de base rigide (12) solidaire de la deuxième armature s'étendant au centre de la base annulaire du corps en élastomère,
**caractérisé en ce que** ledit sommet de la paroi latérale (10) est solidaire de la première armature (6), **caractérisé en ce que** la partie élancée susmentionnée constitue la totalité de la paroi latérale (10) du corps en élastomère,
**et en ce que** le corps en élastomère (9) comporte un pied central (11) qui s'étend verticalement depuis le sommet dudit corps en élastomère jusqu'au contact de la plaque de base (12), ce pied central constituant la partie de soutien susmentionnée et présentant, entre le sommet du corps en élastomère et la plaque de base, une certaine hauteur libre h ainsi qu'un certain diamètre équivalent d tels que le rapport h/d soit inférieur à 2, le corps en élastomère étant ainsi dimensionné pour que, lorsque la charge axiale permanente (F0) est appliquée au support, l'ensemble de la paroi latérale (10) du corps en élastomère subisse un flambage et présente une raideur élastique sensiblement nulle, sans que le pied central (11) ne subisse de flambage.

2. Support antivibratoire selon la revendication 1, dans lequel la paroi latérale (10) du corps en élastomère délimite, avec la plaque de base (12), une chambre de travail (A) qui communique, par l'intermédiaire d'un passage étranglé (16), avec une chambre de compensation (B) délimitée par une paroi (15) aisément déformable, la chambre de travail (A) formant avec la chambre de compensation (B) et le passage étranglé (16) un volume étanche rempli de liquide.

3. Support antivibratoire selon la revendication 2, dans lequel la paroi latérale (10) du corps en élastomère présente, vue en section selon un plan vertical qui contient l'axe central, une forme concave présentant une concavité dirigée vers l'extérieur de la chambre de travail (A).

4. Support antivibratoire selon l'une quelconque des revendications précédentes, dans lequel le rapport l/e est compris entre 3 et 6.

5. Support antivibratoire selon l'une quelconque des revendications précédentes, dans lequel le rapport h/d est compris entre 0,5 et 0,7.

6. Support antivibratoire selon l'une quelconque des revendications précédentes, dans lequel le corps en élastomère (9) présente une forme de révolution autour de l'axe central (Z).

7. Support antivibratoire selon l'une quelconque des revendications précédentes, dans lequel la plaque de base (12) présente un rebord annulaire (12a) qui entoure le pied central (11) du corps en élastomère.

8. Support antivibratoire selon la revendication 2, dans lequel la plaque de base (12) fait partie d'une cloison rigide (13) qui est fixée à la deuxième armature (8) et qui est interposée entre la chambre de travail (A) et la chambre de compensation (B), cette cloison rigide délimitant le passage étranglé (16) et comprenant par ailleurs un passage (19,21,22) entre les deux chambres (A,B), ce passage étant obturé par un clapet (20) qui présente deux faces principales communiquant l'une avec la chambre de travail (A) et l'autre avec la chambre de compensation (B) et qui comporte au moins une partie librement déplaçable vers la chambre de travail et vers la chambre de compensation avec un jeu inférieur à 1mm.

9. Support antivibratoire selon l'une quelconque des revendications précédentes, dans lequel le pied central (11) est précontraint en compression par la paroi latérale du corps en élastomère.

10. Véhicule automobile comportant un support antivibratoire (5) selon l'une quelconque des revendications précédentes et deux éléments rigides (2,3) reliés entre eux par ce support, l'un de ces deux éléments rigides imposant au support une charge verticale permanente comprise entre 500 et 2 500 N, la paroi latérale (10) du corps en élastomère étant soumise à un flambage et présentant alors une raideur élastique sensiblement nulle, et le pied central (11) ne subissant, quant à lui, pas de flambage.

11. Véhicule automobile selon la revendication 9, comportant un bloc motopropulseur (2) et un châssis (3) qui constituent respectivement les deux éléments rigides susmentionnés.

## Patentansprüche

1. Schwingungsdämpfendes Lager, das dazu vorgesehen ist, zwischen zwei starren Elementen (2, 3) angeordnet zu werden, um Schwingbewegungen zwischen diesen beiden Elementen in der Richtung einer vertikalen Mittelachse (Z) zu dämpfen und abzuschwächen und um eine Dauerlast (F0) von 500 bis 2500 N in dieser Richtung zu tragen, die von einem (2) dieser beiden Elemente ausgeübt wird, wobei dieses Lager eine erste und eine zweite Halterung (6, 8) aufweist, die dazu gedacht .sind, entsprechend mit den beiden zu verbindenden starren Elementen fest verbunden zu werden, und einen Elastomerkörper (9) aufweist, der die Verbindung zwischen den beiden Halterungen herstellt, wobei dieser Elastomerkörper eine glockenförmige Seitenwand (10) aufweist, die sich in der genannten Richtung erstreckt und sich dabei von einer Spitze bis zu einer ringförmigen Basis ausweitet, welche mit der zweiten Halterung (8) fest verbunden ist, wobei diese Seitenwand mindestens einen aufragenden Teil aufweist, der zwischen der Spitze und der Basis des Elastomerkörpers eine bestimmte freie Länge 1 sowie eine gewisse durchschnittliche Dicke e dergestalt aufweist, dass das Verhältnis l/e zwischen 2 und 8 liegt, wobei der Elastomerkörper ferner mindestens einen Tragbereich (11) aufweist, der geeignet ist, die Dauerlast (F0) zu tragen, und wobei eine starre Basisplatte (12), die mit der zweiten Halterung (8) fest verbunden ist, sich in der Mitte der ringförmigen Basis des Elastomerkörpers erstreckt,
**dadurch gekennzeichnet,**
**dass** die genannte Spitze der Seitenwand (10) mit der ersten Halterung (6) fest verbunden ist, dass der erwähnte aufragende Teil die gesamte Seitenwand (10) des Elastomerkörpers bildet, und dass der Elastomerkörper (9) einen zentralen Fuß (11) aufweist, der sich vertikal von der Spitze dieses Elastomerkörpers bis zu der Basisplatte (12) erstreckt, mit der er in Kontakt ist, wobei dieser zentrale Fuß den oben genannten Tragbereich bildet und zwischen der Spitze des Elastomerkörpers und der Basisplatte eine gewisse freie Höhe h und einen gewissen equivalenten Durchmesser d dergestalt aufweist, dass das Verhältnis h/d weniger als 2 beträgt, wobei der Elastomerkörper so bemessen ist, dass, wenn die maximale Dauerlast (F0) auf das Lager einwirkt, die gesamte Seitenwand (10) des Elastomerkörpers eine Biegung erfährt und eine elastische Steifheit von im wesentlichen Null aufweist, ohne dass der zentrale Fuß (11) eine Biegung erfährt.

2. Schwingungsdämpfendes Lager nach Anspruch 1, wobei die Seitenwand (10) des Elastomerkörpers zusammen mit der Basisplatte (12) eine Arbeitskammer (A) umgrenzt, die über einen engen Durchlass (16) mit einer Ausgleichskammer (B) kommuniziert, die von einer leicht verformbaren Wand (15) gebildet wird, wobei die Arbeitskammer (A) mit der Ausgleichskammer (B) und dem engen Durchlass (16) einen abgeschlossenen Raum bildet, der mit Flüssigkeit gefüllt ist.

3. Schwingungsdämpfendes Lager nach Anspruch 2, wobei die Seitenwand (10) des Elastomerkörpers, im Schnitt durch eine vertikale Ebene gesehen, die durch die Mittelachse verläuft, eine konkave Form bildet, deren Hohlfläche der Außenseite der Arbeitskammer (A) zugewandt ist.

4. Schwingungsdämpfendes Lager nach einem der vorherigen Ansprüche, wobei das Verhältnis l/e zwischen 3 und 6 liegt.

5. Schwingungsdämpfendes Lager nach einem der vorherigen Ansprüche, wobei das Verhältnis h/d zwischen 0,5 und 0,7 liegt.

6. Schwingungsdämpfendes Lager nach einem der vorherigen Ansprüche, wobei der Elastomerkörper (9) eine um die Mittelachse (Z) umlaufende Form hat.

7. Schwingungsdämpfendes Lager nach einem der vorherigen Ansprüche, wobei die Basisplatte (12) einen ringförmigen Rand (12a) aufweist, der den zentralen Fuß (11) des Elastomerkörpers umgibt.

8. Schwingungsdämpfendes Lager nach Anspruch 2, wobei die Basisplatte (12) Teil einer starren Trennwand (13) ist, die an der zweiten Halterung (8) befestigt ist und zwischen der Arbeitskammer (A) und der Ausgleichskammer (B) angeordnet ist, wobei diese starre Trennwand (13) den engen Durchlass (16) abgrenzt und ferner einen Durchlass (19, 21, 22) zwischen den beiden Kammern (A, B) enthält, wobei dieser Durchlass durch eine Klappe (20) verschlossen wird, die zwei Hauptseiten aufweist, von denen die eine mit der Arbeitskammer (A) und die andere mit der Ausgleichskammer (B) kommuniziert, und die mindestens einen Teil aufweist, der mit einem Spiel von weniger als 1 mm zur Arbeitskammer frei verschiebbar ist.

9. Schwingungsdämpfendes Lager nach einem der vorherigen Ansprüche, wobei der zentrale Fuß (11) von der Seitenwand des Elastomerkörpers durch Druck vorgespannt ist.

10. Kraftfahrzeug mit einem schwingungsdämpfenden Lager (5) nach einem der vorherigen Ansprüche und mit zwei starren Elementen (2, 3), die miteinander durch dieses Lager verbunden sind, wobei das eine dieser beiden starren Elemente das Lager mit einer vertikalen Dauerlast von 500 bis 2500 N belastet, wobei die Seitenwand (10) des Elastomerkörpers einem Biegen ausgesetzt wird und dabei eine elastische Steifheit von im wesentlichen Null aufweist, und wobei der zentrale Fuß (11) selbst keine Biegung erfährt.

11. Kraftfahrzeug nach Anspruch 9, das einen Antriebsmotorblock (2)-und ein Chassis (3) aufweist, die die beiden oben genannten starren Elemente bilden.

## Claims

1. An antivibration support designed to be interposed between two rigid elements (2, 3) to damp and attenuate vibratory motion in a direction between said two elements along a vertical central axis (Z) and to support a static axial load (F0) in said direction, lying in the range 500 N to 2500 N, that is exerted by one of the two elements (2), said support comprising first and second rigid strength members (6, 8) designed to be secured respectively to the first and second rigid elements that are to be united, and an elastomer body (9) interconnecting the two strength members, said elastomer body having a bell-shaped side wall (10) which extends in said direction, flaring from a top to an annular base secured to the second strength member (8), said side wall having at least one slender portion which presents a free length *1* between the top and the base of the elastomer body and which presents an average thickness e such that the ratio *1/e* lies in the range 2 to 8, the elastomer body also having at least one support portion (11) adapted to support the static load (F0), and a rigid baseplate (12) secured to the second strength member extending to the center of the annular base of the elastomer body,
**characterized in that** said top of the side wall (10) is secured to the first strength member (6),
**characterized in that** said slender portion constitutes all of the side wall (10) of the elastomer body, and
in that the elastomer body includes a central leg (11) which extends vertically from the top of said elastomer body to contact with the baseplate (12), said central leg constituting the above-mentioned support portion and presenting, between the top of the elastomer body and the baseplate, a free height h and an equivalent diameter d such that the ratio h/d is less than 2, the elastomer body having dimensions such that when the static axial load (F0) is applied to the support, the entire side wall (10) of the elastomer body is subjected to buckling and presents substantially zero elastic stiffness, without the central leg (11) being subjected to buckling.

2. An antivibration support according to claim 1, in which the side wall (10) of the elastomer body co-operates with the baseplate (12) to define a working chamber (A) which communicates, via a narrow passage (16), with a compensation chamber (B) defined by an easily deformable wall (15), the working chamber (A), the compensation chamber (B), and the narrow passage (16) together forming a sealed volume filled with liquid.

3. An antivibration support according to claim 1 or 2, in which the side wall (10) of the elastomer body, in section on a vertical plane containing the central axis, is concave in shape with its concave side facing outwards from the working chamber(A).

4. An antivibration support according to any preceding claim, in which the ratio *1/e* lies in the range 3 to 6.

5. An antivibration support according to any preceding claim, in which the ratio h/d lies in the range 0.5 to 0.7.

6. An antivibration support according to any preceding claim, in which the elastomer body (9) is circularly symmetrical about the central axis (Z).

7. An antivibration support according to any preceding claim, in which the baseplate (12) has an annular rim (12a) surrounding the central leg (11) of the elastomer body.

8. An antivibration support according to any preceding claim, in which the baseplate (12) forms a portion of a rigid partition (13) which is fixed to the second strength member (8) and which is interposed between the working chamber (A) and the compensation chamber (B), said rigid partition defining the narrow passage (16) and also including a passage (19, 21, 22) between the two chambers (A, B), said passage being obstructed by a valve member (20) having two main faces, one in communication with the working chamber (A) and the other in communication with the compensation chamber (B), and including at least a portion that is freely movable towards the working chamber and towards the compensation chamber with clearance of less than 1 mm.

9. An antivibration support according to any preceding claim, in which the central leg (11) is prestressed in compression by the side wall of the elastomer body.

10. A motor vehicle including an antivibration support (5) according to any preceding claim, and two rigid elements (2, 3) interconnected by said support, one of the two rigid elements imposing a vertical static load lying in the range 500 N to 2500 N on the support, the side wall (10) of the elastomer support being subjected to buckling and then presenting substantially zero elastic stiffness, while the central leg (11) is not subject to buckling.

11. A motor vehicle according to claim 9, including a drive unit (2) and a structure (3) respectively constituting the two above-mentioned rigid elements.
